(19) Europäisches Patentamt

European Patent Office

Office européen des brevets

(11) Veröffentlichungsnummer: **0 433 957 B1**

(12) **EUROPÄISCHE PATENTSCHRIFT**

(45) Veröffentlichungstag der Patentschrift: **19.04.95**

(51) Int. Cl.6: **C08F 261/04**, C09J 151/00

(21) Anmeldenummer: **90124493.9**

(22) Anmeldetag: **18.12.90**

(54) **Verwendung wässriger Copolymerdispersionen unter Zusatz von sauren Metallsalzen oder freien Säuren als Klebemittel.**

(30) Priorität: **22.12.89 DE 3942628**

(43) Veröffentlichungstag der Anmeldung:
**26.06.91 Patentblatt 91/26**

(45) Bekanntmachung des Hinweises auf die
Patenterteilung:
**19.04.95 Patentblatt 95/16**

(84) Benannte Vertragsstaaten:
**AT BE CH DE ES FR GB IT LI NL SE**

(56) Entgegenhaltungen:
**US-A- 4 118 357**

(73) Patentinhaber: **WACKER-CHEMIE GMBH
Hanns-Seidel-Platz 4
D-81737 München (DE)**

(72) Erfinder: **Härzschel, Reinhard, Dr.
Karl-Bosch-Strasse 7
W-8263 Burghausen (DE)**
Erfinder: **Weissgerber, Rudolf, Dr.
Karl-Gros-Strasse 9
W-8263 Burghausen (DE)**
Erfinder: **Kaiser, Herbert
Robert-Koch-Strasse 18
W-8263 Burghausen (DE)**
Erfinder: **Kaiser, Wilhelm
Stadtplatz 50
W-8263 Burghausen (DE)**

**Beschreibung**

Die Erfindung betrifft die Verwendung von wäßrigen Vinylester-Pfropfcopolymer-Dispersionen unter Zusatz von sauren, wasserlöslichen Metallsalzen oder freien Säuren als Klebemittel mit hervorragender Heißwasserbeständigkeit und ein Verfahren zur Herstellung der wäßrigen Vinylester-Pfropfcopolymer-Dispersionen.

Die Verwendung von wäßrigen Polyvinylester-Dispersionen als Klebemittel ist bekannt. Ein Nachteil dieser Dispersionen ist deren geringe Wasserbeständigkeit bedingt durch die Anwesenheit von Schutzkolloiden, wie etwa Polyvinylalkohol.

In der DE-A 2620738 (US-A 4118357) wird vorgeschlagen zur Verbesserung der Wasserbeständigkeit Polyvinylester-Dispersionen einzusetzen, bei denen die Polyvinylester-Komponente auf Polyvinylalkohol aufgepfropft ist, und die als Härterzusatz wasserlösliche Säuren oder wasserlösliche saure Metallsalze enthalten. In Verbindung mit wasserlöslichen Säuren als Härter weisen diese Dispersionen zwar akzeptable Lagerstabilität (Topfzeiten von mehr als 4 Wochen) auf, die Heißwasserbeständigkeit allerdings ist, im Vergleich zum Zusatz von wasserlöslichen Metallsalzen als Härter, unbefriedigend. Werden die ebengenannten Metallsalze als Härterzusatz mit den Vinylester-Pfropfcopolymerdispersionen eingesetzt, erhält man zwar Klebemittel mit hervorragender Heißwasserbeständigkeit, ständigkeit, die Lagerstabilität wird allerdings drastisch reduziert (Topfzeiten von deutlich weniger als 4 Wochen).

Es bestand daher die Aufgabe, Klebemittel auf der Basis von wäßrigen Vinylester-Pfropfcopolymeren zur Verfügung zu stellen, die im Gemisch mit wasserlöslichen Metallsalz-Härtern eine hohe Heißwasserbeständigkeit und eine hohe Lagerstabilität aufweisen.

Gegenstand der Erfindung ist die Verwendung von wäßrigen Vinylester-Pfropfcopolymer-Dispersionen, die wasserlösliche Metallsalze von einbasischen Säuren mit einem $pK_s$ unter 0 oder freie Säuren mit einem $pK_s$ unter 0 enthalten, als Klebemittel mit hoher Heißwasserbeständigkeit und langer Topfzeit, dadurch gekennzeichnet, daß das Vinylester-Pfropfcopolymere zusamnengesetzt ist aus

I.    2-12 Gew.%, bezogen auf das Gesamtgewicht des Pfropfcopolymeren, eines oder mehrerer Polyvinylalkohole mit einem Hydrolysegrad von 60 bis 99 Mol%,und

II.    88-98 Gew.%, bezogen auf das Gesamtgewicht des Pfropfcopolymeren eines Monomer-Gemisches enthaltend

a. mindestens 5 Gew.%, bezogen auf das Gesamtgewicht des Monomer-Gemisches, Vinylester von gesättigten, hochverzweigten, aliphatischen Monocarbonsäuren mit 9 oder 10 C-Atomen, Vinylpivalat, Diisopropylmaleinat, Diisopropylfumarat, oder deren Gemische,

b. mindestens 50 Gew.%, bezogen auf das Gesamtgewicht des Monomer-Gemisches, von von a verschiedenen Vinylestern mit 1 bis 18 C-Atomen im Säurerest,

c. 0.01-4 Gew.%, bezogen auf das Gesamtgewicht des Monomer-Gemisches, copolymerisierbare mehrfach ethylenisch ungesättigte Monomere,

d. 0-26 Gew.%, bezogen auf das Gesamtgewicht des Monomer-Gemisches, weitere copolymerisierbare einfach ethylenisch ungesättigte Monomere.

Die Gewichtsangaben addieren sich natürlich im Pfropfcopolymeren auf 100 Gew.% auf.

Als Pfropfgrundlage I eignen sich teilverseifte Polyvinylalkohole mit einem Hydrolysegrad von 60 bis 99 Mol%, vorzugsweise 75 bis 95 Mol%. Die Polyvinylalkohole werden in einer Menge von 2 bis 12 Gew.%, bezogen auf das Gesamtgewicht des Pfropfcopolymeren, eingesetzt.

Das Pfropfmonomer-Gemisch II hat einen Anteil von 88 bis 98 %, bezogen auf das Gesamtgewicht des Pfropfcopolymeren.

Als Komponente a enthält das Pfropfmonomer-Gemisch II vorzugsweise 5 bis 50 Gew.%, besonders bevorzugt 10 bis 30 Gew.%, bezogen auf das Gesamtgewicht des Monomer-Gemisches, Vinylester von gesättigten, hochverzweigten aliphatischen Monocarbonsäuren mit 9 oder 10 C-Atomen, Vinylpivalat, Diisopropylmaleinat, Diisopropylfumarat, oder deren Gemische. Beispiele für Vinylester von gesättigten, hochverzweigten aliphatischen Monocarbonsäuren mit 9 oder 10 C-Atomen sind die Vinylversaticsäureester-Gemische VeoVa 9 und VeoVa 10 (Handelsprodukte der Firma Shell Chemie GmbH) oder einzelne Bestandteile dieser Gemische.

Besonders bevorzugt werden Vinylester von gesättigten aliphatischen Monocarbonsäuren mit 9 C-Atomen, die in $\alpha$-Stellung zur Carboxylgruppe ein quartäres C-Atom aufweisen.

Insbesonders sind die Vinylversaticsäureester VeoVa 9 (Handelsprodukt der Firma Shell Chemie GmbH) zu nennen, das ist ein Gemisch von Vinylestern hochverzweigter Monocarbonsäuren mit 9 C-Atomen, oder einzelne Bestandteile dieses Gemisches.

Als Komponente b enthält das Pfropfmonomer-Gemisch II vorzugsweise 50 bis 95 Gew.%, bezogen auf das Gesamtgewicht des Monomer-Gemisches, eines oder mehrerer, von Komponente a verschiedener Vinylester mit 1 bis 18 C-Atomen im Säurerest. Beispiele hierfür sind Vinylformiat, Vinylacetat, Vinylpropionat, 2-Ethylhexansäure-Vinylester, Vinyllaurat oder Vinylstearat.

Als Komponente c enthält das Pfropfmonomer-Gemisch II 0.01 bis 4 Gew.%, bezogen auf das Gesamtgewicht des Monomer-Gemisches, mehrfach ethylenisch ungesättigte Comonomere.

Beispiele hierfür sind Decadien, Vinylcrotonat, Diallylphtalat, Divinyladipat, Methylenbisacrylamid, Triallylcyanurat, Butandioldiacrylat, Hexandioldiacrylat, Pentaerythritoltriacrylat, Trimethylolpropantriacrylat, Divinyldimethylsilan, Divinyltetramethyldisiloxan, Triethylenglykoldimethacrylat, Allylacrylat und Allylmethacrylat.

Gegebenenfalls können noch als Komponente d bis zu 26 Gew.%, bezogen auf das Gesamtgewicht des Monomergemisches, weitere ethylenisch ungesättigte Monomere eingesetzt werden.

Beispiele hierfür sind Acryl- oder Methacrylsäure, sowie deren Ester mit primären oder sekundären Alkoholen mit 1 bis 18 C-Atomen, beispielsweise Methanol, Ethanol, Propanol, Butanol und Gemische kurzkettiger Alkohole, 2-Ethylhexyl-, Cyclohexyl- und Laurylalkohol; Olefine, wie beispielsweise Ethylen, Propylen, Butylen; Vinylhalogenide und Vinylidenhalogenide, wie beispielsweise Vinylfluorid, Vinylidenfluorid, Vinylidenchlorid; Vinylaromaten, wie Styrol; $\alpha,\beta$-ungesättigte Monocarbonsäuren mit einer Kohlenstoffkette zwischen 4 und 10 Kohlenstoffatomen, wie etwa Croton- und Isocrotonsäure und deren Ester mit primären oder sekundären Alkoholen mit 1 bis 18 C-Atomen; $\alpha,\beta$-ungesättigte Dicarbonsäuren mit 4 bis 10 Kohlenstoffatomen, wie beispielsweise Malein-, Fumar- und Itakonsäure und deren Mono- und Diester mit primären oder sekundären Alkoholen mit 1 bis 18 C-Atomen, ausgenommen die als Komponente a genannten. Weitere Beispiele sind stickstoffhaltige, monoolefinisch ungesättigte Monomere, wie etwa Acrylnitril, Acrylamid, Methacrylamid, N-Methylolacrylamid, N-Methylolmethacrylamid, N-Methylolallylcarbamat, N-Methylolalkylether, Mannichbasen oder N-Methylolester von N-Methylol(meth)acrylamid bzw. N-Methylol-allylcarbamat. Bei der Verwendung von stickstoffhaltigen, monoolefinisch ungesättigten Monomeren sollte deren Menge maximal 10 Gew.%, vorzugsweise 1 bis 6 Gew.%, bezogen auf das Gesamtgewicht des Monomergemisches, betragen.

Die Herstellung der erfindungsgemäßen wäßrigen Vinylester-Pfropfcopolymer-Dispersion erfolgt bei Temperaturen zwischen 35 und 80°C. Zur Initiierung der Polymerisation werden organische Peroxide oder Azoverbindungen, beispielsweise tert.-Butylhydroperoxid, in einer Menge von 0.1 bis 3.0 Gew.%, bezogen auf das Gesamtgewicht des Pfropfmonomer-Gemisches, eingesetzt. Vorzugsweise werden die organischen Peroxide bzw. Azoverbindungen in Kombination mit geeigneten Reduktionsmitteln eingesetzt. Vorzugsweise beträgt die Menge an Reduktionsmittel 0.05 bis 3.0 Gew.%, bezogen auf das Gesamtgewicht des Pfropfmonomer-Gemisches. Beispiele für geeignete Reduktionsmittel sind Natriumformaldehydsulfoxylat, Natriumsulfit, Natriumhydrogensulfit oder Dithionit.

Zur Beeinflußung der Viskosität können noch anionische oder nichtionische Emulgatoren in einer Menge von 0.1 bis 1.0 Gew.%, bezogen auf das Gesamtgewicht des Monomergemisches, eingesetzt werden. Beispiele hierfür sind Alkylsulfate, Alkylsulfonate, Sulfosuccinate bzw. Polyoxyethylenether von Fettalkoholen.

Zur Polymerisation wird der Polyvinylalkoholanteil in wäßriger Suspension, gegebenenfalls zusammen mit dem Emulgator, vorgelegt und die restlichen Bestandteile des Reaktionsgemisches einzeln oder im Gemisch zudosiert. Vorzugsweise wird der Polyvinylalkoholanteil in wäßriger Suspension vorgelegt und die Comonomer-Komponenten a, b, c und d im Gemisch partiell vorgelegt und partiell dosiert, wobei die Komponente d, falls es sich dabei um ein wasserlösliches Comonomer handelt, separat dosiert wird.

Die erfindungsgemäß zu verwendenden Polymerdispersionen haben einen Feststoffgehalt von 40 bis 60 Gew.%.

Die so hergestellten Pfropfcopolymer-Dispersionen können auch, gegebenenfalls unter Zugabe einer Verdüsungshilfe, von Antischaummittel und/oder Antiblockmittel, sprühgetrocknet oder gefriergetrocknet werden. Die so erhaltenen Dispersionspulver werden dann zur Verwendung als Klebemittel wieder in Wasser redispergiert, unter Einstellung des obengenannten Feststoffgehalts. Die genaue Verfahrensweise hierzu ist dem Fachmann geläufig.

Zur Erhöhung der Wasserbeständigkeit der Verklebung werden der Vinylester-Pfropfcopolymer-Dispersion noch 0.5 bis 10 Gew.%, bezogen auf das Gewicht der Pfropfcopolymer-Dispersion, wasserlösliche Metallsalze von einbasischen Säuren mit einem $pK_s$ unter 0 zugegeben. Besonders geeignet sind Salze von Al(III), Fe(III) und/oder Zr(IV), beispielsweise Aluminiumnitrat, Eisenchlorid, Zirkonoxychlorid.

Als Härter können auch freie Säuren mit einem $pK_s$ kleiner 0 eingesetzt werden. Beispiele hierfür sind Salzsäure, Salpetersäure, Perchlorsäure, Phosphorsäure oder deren Mischungen. Die Säuren werden in 5-normaler wäßriger Lösung in einer Menge von 0.5 bis 10 Gew.%, bezogen auf das Gewicht der Pfropfcopolymer-Dispersion, eingesetzt.

Als weitere Zusätze kann das erfindungsgemäße Klebemittel noch Verfilmungshilfsmittel oder Weichmacher enthalten.

3

Durch die Copolymerisation der Comonomer-Komponente a in den Vinylester-Pfropfcopolymerisaten, sind Klebemittel speziell für die Holzverleimung erhältlich, die sich vor allem durch eine hohe Heißwasserbeständigkeit auszeichnen, die eine Zuordnung der erfindungsgemäßen Klebemittel in die Beanspruchungsgruppe B 4/13 gemäß DIN 68602 ermöglicht. Selbst durch den Einbau einer großen Menge an vernetzend wirkenden Comonomeren, beispielsweise N-Methylolacrylamid, ist diese Heißwasserbeständigkeit nicht zu erreichen. Der Einbau solch großer Mengen reaktiver Comonomere führt vielmehr zur drastischen Absenkung der Topfzeit der Klebemittel-Dispersion.

Demgegenüber weisen die erfindungsgemäßen Klebemittel auch beim Zusatz von sauren Metallsalz-Härtern außerordentlich lange Topfzeiten von über 2 Monaten auf.

Die erfindungsgemäßen Klebemittel eignen sich insbesonders zur Holzverleimung in Innenräumen mit extremen Klimaschwankungen und Wassereinwirkung, beispielsweise in Hallenbädern oder Duschkabinen, und zur Außenverwendung mit hohen klimatischen Einflüssen, beispielsweise Fenster, Außentüren, Leitern und Treppen.

Die nachfolgenden Beispiele dienen zur weiteren Erläuterung der Erfindung.

Beispiel 1:

In einem Reaktor der mit Rückflußkühler, Rührer, Zudosiermöglichkeiten, Stickstoffeinleitung, sowie Heiz- und Kühlmöglichkeiten versehen ist, werden 6 Gewichtsteile eines teilverseiften Polyvinylalkohols mit einem Hydrolysegrad von 90 Mol% und 70 Gewichtsteile Wasser vorgelegt. Nach Spülen mit Stickstoff werden zunächst 25 Gewichtsprozent einer Monomerlösung, bestehend aus 80 Gewichtsteilen Vinylacetat, 19.9 Gewichtsteilen VeoVa 9, 0.05 Gewichtsteilen Triallylcyanurat und 0.1 Gewichtsteilen t-Butylhydroperoxid in die Vorlage gegeben und das Reaktionsgemisch erwärmt.

Bei ca. 55°C wird mit der Dosierung des Initiator-Zulaufs begonnen, bestehend aus 7 Gewichtsteilen Wasser, 0.15 Gewichtsteilen Natriumformaldehydsulfoxylat und 0.15 Gewichtsteilen Natriumbicarbonat. Bei 65°C wird mit der Monomerdosierung begonnen. Wobei die eine Monomerdosierung aus dem Rest der obengenannten Monomerlösung besteht und die zweite Monomerdosierung aus 2 Gewichtsteilen N-Methylolacrylamid und 10 Teilen Wasser besteht. Der Initiatorzulauf läuft 1 Stunde länger als die Monomerdosierung.

Die Polymerisation wird bei 65-70°C durchgeführt, wobei die Geschwindigkeit der Monomerzuläufe so geregelt wird, daß kein Rückfluß auftritt. Nach Beendigung aller Dosierungen wird noch eine Stunde bei 70°C nachpolymerisiert. Man erhält eine ca. 50 %ige, koagulatfreie Dispersion mit einer Viskosität von ca. 15000 mPas (Brookfield 20 Upm, 23°C). Zur Herabsetzung der MFT wird mit ca. 3 % Butyldiglykolacetat modifiziert.

Beispiele 2 bis 5 und Vergleichsbeispiele A bis E:

Die Herstellung der Dispersionen in den Beispielen 2 bis 5 bzw. den Vergleichsbeispielen A bis C erfolgte analog dem Verfahren in Beispiel 1. Die Polymerzusammensetzung sowie der Festgehalt der Dispersionen sind in Tabelle 1 bzw. Tabelle 2 beschrieben.

Zur Herstellung der Klebemittel wurden die Dispersionen mit den in den Tabellen 1 und 2 angegebenen Arten und Mengen an Härter vermischt.

Die Prüfung der Klebefestigkeit erfolgte gemäß DIN 68602 in Verbindung mit DIN 53254.

Die Probekörper wurden gemäß DIN 53254 hergestellt. Hierzu wurden jeweils zwei je 5 mm dicke, 130 mm breite und 150 mm lange Buchenholzplatten mit der zu testenden Klebemittel-Dispersion verklebt.

Für die Prüfung zur Zuordnung in die Beanspruchungsgruppe B 3/5 (Kaltwasserfestigkeit) gemäß DIN 68602 wurden die Probekörper nach der Verleimung 7 Tage bei Normalklima (20°C, 65 % Luftfeuchtigkeit) und anschließend 4 Tage in 20°C kaltem Wasser gelagert (DIN 53254).

Nach der Lagerung wurde die Klebefestigkeit im Scherversuch ermittelt, wobei mit einer Zugprüfmaschine mit 50 mm/min Abzugsgeschwindigkeit die verklebten Platten gegeneinander verschoben und bis zum Bruch belastet wurden. Beim Bruch wurde die dabei auftretende Maximalkraft $F_{Max}$ ermittelt. Die Zugfestig-keit $\tau_a$ errechnet sich gemäß DIN 53254 aus $\tau_a = F_{Max}/A$, wobei A die geklebte Prüffläche in mm$^2$ ist.

Die Zuordnung in die Beanspruchungsgruppe B 3/5 erfordert eine Zugfestigkeit $\tau_a$ von $\geq$ 2 N/mm$^2$ (DIN 68602).

Die Prüfung zur Zuordnung in die Beanspruchungsgruppe B 4/13 (Heißwasserfestigkeit) gemäß DIN 68602 erfolgte bezüglich der Herstellung der Probekörper analog oben.

Die Probekörper wurden aber nach der Verleimung der Holzplatten 7 Tage bei Normalklima (20°C, 65 % Luftfeuchtigkeit) gelagert, , daran anschließend 6 Stunden in kochendem Wasser und abschließend 2 Stunden in 20°C kaltem Wasser gelagert.

Die Bestimmung der Zugfestigkeit $\tau_a$ erfolgte wie oben gemäß DIN 53254.

Die Zuordnung in die Beanspruchungsgruppe B 4/13 erfordert eine Zugfestigkeit $\tau_a$ von $\geq$ 4 N/mm$^2$ (DIN 68602).

In den Tabellen 1 und 2 sind Polymerzusammensetzung und Festgehalt der Klebemittel-Dispersionen, Härterzusatz sowie Kaltwasserfestigkeit, Heißwasserfestigkeit und Topfzeit aufgelistet.

Tabelle 1 enthält die Daten der erfindungsgemäßen Klebemittel. Tabelle 2 enthält die Daten zu Klebemittel, die nicht dem erfindungsgemäßen Vorgehen entsprechen.

Der Vergleich der erfindungsgemäßen Klebemittel aus Tabelle 1 mit den Vergleichsbeispielen in Tabelle 2 zeigt die entscheidende Bedeutung, die die Copolymerisation der Comonomer-Komponente a für den Erhalt einer hohen Heißwasserbeständigkeit, gemäß Beanspruchungsgruppe B 4/13 (DIN 68602), und für den Erhalt von langen Topfzeiten hat.

Die Copolymerisation mit beliebigen Vinylestern, wie etwa Vinyllaurat (Vergl.bsp. B), führt zu Klebemitteln, die keine befriedigende Heißwasserbeständigkeit haben.

Die Copolymerisation mit vernetzend wirkenden Comonomeren allein, wie beispielsweise N-Methylolacrylamid (Vergl.bsp. A) oder Divinyladipat (Vergl.bsp. C), kann die geforderte Heißwasserbeständigkeit und besonders die geforderte Lagerstabilität nicht sicherstellen.

Tabelle 1

| Beispiel | 1 | 2 | 3 | 4 | 5 |
|---|---|---|---|---|---|
| Polymerzusammensetzung (Gew.%) | | | | | |
| Vinylacetat | 73.94 | 73.94 | 69.64 | 69.11 | 74.28 |
| VeoVa 9 | 18.48 | 18.48 | - | - | - |
| VeoVa 10 | - | - | - | - | 18.57 |
| Vinylpivalat | - | - | 23.21 | - | - |
| Vinylchlorid | - | - | - | - | - |
| Ethylen | - | - | - | - | - |
| Vinyllaurat | - | - | - | - | - |
| Diisopropylmaleinat | - | - | - | 23.04 | - |
| Divinyladipat | - | - | 0.19 | - | 0.19 |
| Triallylcyanurat | 0.03 | 0.03 | - | 0.03 | - |
| N-Methylolacrylamid | 1.85 | 1.85 | 1.39 | 2.30 | 2.79 |
| Polyvinylalkohol | 5.55 | 5.55 | 5.57 | 5.53 | 4.18 |
| Festgehalt (Gew.%) | 50 | 50 | 50 | 50 | 50 |
| Härter (Gew.% der Dispersion) | | | | | |
| AlCl$_3$ | 5.00 | | 5.00 | 5.00 | 5.00 |
| H$_3$PO$_4$ | | 5.00 | | | |
| Klebefestigkeit | | | | | |
| B 3/5 (N/mm$^2$) | 4.30 | 4.10 | 4.70 | 4.00 | 4.40 |
| B 4/13 (N/mm$^2$) | 4.50 | 4.10 | 4.40 | 4.20 | 4.30 |
| Topfzeit (Monate) | >2 | >2 | >2 | >2 | >2 |

Tabelle 2

| Vergleichsbeispiel | A | B | C |
|---|---|---|---|
| Polymerzusammensetzung (Gew.%) | | | |
| Vinylacetat | 88.08 | 68.79 | 91.49 |
| VeoVa 9 | - | - | - |
| VeoVa 10 | - | - | - |
| Vinylpivalat | - | - | - |
| Vinylchlorid | - | - | - |
| Ethylen | - | - | - |
| Vinyllaurat | - | 22.93 | - |
| Diisopropylmaleinat | - | - | - |
| Divinyladipat | - | - | 0.27 |
| Triallylcyanurat | 0.03 | 0.03 | - |
| N-Methylolacrylamid | 6.61 | 2.75 | 4.57 |
| Polyvinylalkohol | 5.28 | 5.50 | 3.66 |
| Festgehalt (Gew.%) | 50 | 50 | 50 |
| Härter (Gew.% der Dispersion) | | | |
| $AlCl_3$ | 5.00 | 5.00 | 5.00 |
| $H_3PO_4$ | - | - | - |
| Klebefestigkeit | | | |
| B 3/5 ($N/mm^2$) | 6.00 | 2.70 | 5.00 |
| B 4/13 ($N/mm^2$) | 2.40 | 2.50 | 2.70 |
| Topfzeit (Monate) | <2 | ca.2 | <2 |

**Patentansprüche**

1. Verwendung von wäßrigen Vinylester-Pfropfcopolymer-Dispersionen, die wasserlösliche Metallsalze von einbasischen Säuren mit einem $pK_s$ unter 0 oder freie Säuren mit einem $pK_s$ unter 0 enthalten, als Klebemittel mit hoher Heißwasserbeständigkeit und langer Topfzeit, dadurch gekennzeichnet, daß das Vinylester-Pfropfcopolymere zusammengesetzt ist aus

   I. 2-12 Gew.%, bezogen auf das Gesamtgewicht des Pfropfcopolymeren, eines oder mehrerer Polyvinylalkohole mit einem Hydrolysegrad von 60 bis 99 Mol%, und

   II. 88-98 Gew.%, bezogen auf das Gesamtgewicht des Pfropfcopolymeren, eines Monomer-Gemisches enthaltend

   a. mindestens 5 Gew.%, bezogen auf das Gesamtgewicht des Monomer-Gemisches, Vinylester von gesättigten, hochverzweigten aliphatischen Monocarbonsäuren mit 9 oder 10 C-Atomen, Vinylpivalat, Diisopropylmaleinat, Diisopropylfumarat, oder deren Gemische,

   b. mindestens 50 Gew.%, bezogen auf das Gesamtgewicht des Monomer-Gemisches, von von a verschiedenen Vinylesters mit 1 bis 18 C-Atomen im Säurerest,

   c. 0.01-4 Gew.%, bezogen auf das Gesamtgewicht des Monomer-Gemisches, copolymerisierbare mehrfach ethylenisch ungesättigte Monomere,

   d. 0-26 Gew.%, bezogen auf das Gesamtgewicht des Monomer-Gemisches, weitere copolymerisierbare einfach ethylenisch ungesättigte Monomere.

2. Verwendung nach Anspruch 1, dadurch gekennzeichnet, daß als Härter wasserlösliche Metallsalze von einbasischen Säuren mit einem $pK_s$ unter 0 von Al(III), Fe(III) und/oder Zr(IV), in einer Menge von 0.5 bis 10 Gew.%, bezogen auf das Gewicht der Vinylester-Pfropfcopolymer-Dispersion, zugegeben werden.

3. Verfahren zur Herstellung von in Anspruch 1 verwendeten Vinylester-Pfropfcopolymer-Dispersionen, dadurch gekennzeichnet, daß der Polyvinylalkohol-Anteil in wäßriger Suspension vorgelegt wird und die Comonomer-Komponenten a, b, c und d im Gemisch partiell vorgelegt und partiell dosiert werden, wobei die Komponente d, falls es sich dabei um ein wasserlösliches Comonomer handelt, separat dosiert wird, und die Polymerisation nach Initierung mit einem Redoxkatalysator-System, bestehend aus 0.1 bis 3.0 Gew.% organischem Peroxid oder Azoverbindung und 0.05 bis 3.0 Gew.% Reduktionsmittel, bei 35 bis 80°C durchgeführt wird.

4. Verfahren nach Anspruch 3, dadurch gekennzeichnet, daß die Vinylester-Pfropfcopolymer-Dispersionen gegebenenfalls unter Zugabe einer Verdüsungshilfe, Antischaummittel und/oder Antiblockmittel sprühgetrocknet oder gefriergetrocknet werden.

5. Verfahren nach Anspruch 4, dadurch gekennzeichnet, daß die getrockneten Vinylester-Pfropfcopolymer-Dispersionen zur Verwendung als Klebemittel wieder in Wasser redispergiert werden.

## Claims

1. Use of an aqueous vinyl ester graft copolymer dispersion which contains water-soluble metal salts of monobasic acids having a $pK_a$ of less than 0 or free acids having a $pK_a$ of less than 0 as an adhesive having a high resistance to hot water and a long pot life, characterized in that the vinyl ester graft copolymer is composed of

I. 2-12 % by weight, based on the total weight of the graft copolymer, of one or more polyvinyl alcohols having a degree of hydrolysis of 60 to 99 mol% and

II. 88-98 % by weight, based on the total weight of the graft copolymer, of a monomer mixture containing

a. at least 5 % by weight, based on the total weight of the monomer mixture, of vinyl eaters of saturated, highly branched aliphatic monocarboxylic acids having 9 or 10 C atoms, vinyl pivalate, diisopropyl maleate, diisopropyl fumarate, or mixtures thereof,

b. at least 50 % by weight, based on the total weight of the monomer mixture, of vinyl eaters other than a having 1 to 18 C atoms in the acid radical,

c. 0.01-4 % by weight, based on the total weight of the monomer mixture, of copolymerizable polyethylenically unsaturated monomers and

d. 0-26 % by weight, based on the total weight of the monomer mixture, of other copolymerizable mono-ethylenically unsaturated monomers.

2. Use according to Claim 1, characterized in that water-soluble metal salts of monobasic acids having a $pK_a$ of less than 0 with Al(III), Fe(III) and/or Zr(IV) are added in an amount of 0.5 to 10 % by weight, based on the weight of the vinyl ester graft copolymer dispersion, as the hardener.

3. Process for the preparation of a vinyl ester graft copolymer dispersion used in Claim 1, characterized in that the polyvinyl alcohol content is initially introduced into the reaction vessel in aqueous suspension and the comonomer components a, b, c and d are partly initially introduced as a mixture and partly metered in, component d being metered in separately if this is a water-soluble comonomer, and, after initiation with a redox catalyst system consisting of 0.1 to 3.0 % by weight of organic peroxide or azo compound and 0.05 to 3.0 % by weight of reducing agent, the polymerization is carried out at 35 to 80°C.

4. Process according to Claim 3, characterized in that the vinyl ester graft copolymer dispersions are spray-dried or freeze-dried, if appropriate with the addition of an atomizing aid, an antifoaming agent and/or an antiblocking agent.

5. Process according to Claim 4, characterized in that the dried vinyl ester graft copolymer dispersions are redispersed in water for use as adhesives.

## Revendications

1. Utilisation de dispersions aqueuses de copolymères greffés d'esters vinyliques, contenant des sels métalliques solubles dans l'eau d'acides monofonctionnels ayant un $pK_s$ en dessous de 0 ou d'acides libres ayant un $pK_s$ en dessous de 0, en tant qu'agents adhésifs ayant une plus grande résistance à l'eau chaude et une plus longue durée de vie en pot, **caractérisée** en ce que le copolymère greffé d'esters vinyliques est constitué

    I - de 2 à 12 % en poids, rapporté au poids total de copolymères greffés, d'un ou plusieurs alcools polyvinyliques ayant un degré d'hydrolyse de 60 à 99 mole %, et

    II - de 88 à 98 % en poids, rapporté au poids total de copolymères greffés, d'un mélange de monomères contenant

        a. au moins 5 % en poids, rapporté au poids total du mélange de monomères, d'esters vinyliques d'acides monocarboxyliques aliphatiques, saturés et hautement ramifiés ayant 9 ou 10 atomes de carbone, de pivalate de vinyle, de maléïnate de diisopropyle, de fumarate de diisopropyle ou de leurs mélanges,

        b. au moins 50 % en poids, rapporté au poids total du mélange de monomères, de différents esters vinyliques de a. dont le reste acide possède de 1 à 18 atomes de carbone,

        c. 0,01 à 4 % en poids, rapporté au poids total du mélange de monomères, de monomères copolymérisables ayant de multiples insaturations éthyléniques,

        d. 0 à 26 % en poids, rapporté au poids total du mélange de monomères, d'autres monomères copolymérisables ayant une simple insaturation éthylénique.

**2.** Utilisation selon la revendication 1, **caractérisée** en ce que des sels métalliques d'acides monofonctionnels ayant un $pK_s$ en dessous de 0, solubles dans l'eau, de Al (III), Fe (III) et/ou de Zr (IV), en quantité de 0,5 à 10 % en poids, rapporté au poids de la dispersion de copolymères greffés d'esters vinyliques, sont introduits en tant qu'agents durcissants.

**3.** Procédé de préparation de dispersions de copolymères greffés d'esters vinyliques utilisées dans la revendication 1, **caractérisé** en ce qu'on introduit au préalable, partiellement, la partie d'alcools polyvinyliques en suspension aqueuse et les composants comonomères a, b, c et d en mélange sont partiellement introduits au préalable et partiellement introduits ensuite, les composants d, dans le cas où il s'agit d'un comonomère soluble dans l'eau, étant introduits séparément et on effectue la polymérisation à une température de 35 à 80 °C après initiation par un système de catalyseur redox, comprenant de 0,1 à 3,0 % en poids de peroxydes organiques ou de composés azoïques et 0,05 à 3,0 % en poids d'agents réducteurs.

**4.** Procédé selon la revendication 3, **caractérisé** en ce que les dispersions de copolymères greffés d'esters vinyliques sont séchées par lyophilisation ou séchées par pulvérisation éventuellement en additionnant des agents de pulvérisation, des agents antimousse et/ou des agents anti-agglomération.

**5.** Procédé selon la revendication 4, **caractérisé** en ce que les dispersions de copolymères greffés d'esters vinyliques séchées sont redispersées dans l'eau en vue de leur utilisation comme agents adhésifs.